# FASCICULE DE BREVET EUROPEEN

(11) **EP 1 416 422 B1**
(45) Date de publication et mention de la délivrance du brevet: **24.01.2007**
(21) Numéro de dépôt: 03292585.1
(22) Date de dépôt: 17.10.2003
(51) Int. Cl.: G06K 7/10, H04L 12/58, H04M 3/53, H04Q 7/22, G06F 1/00, G07C 9/00

(54) **Installation de gestion centralisee de donnees de messagerie en correspondance d'identifiants d'utilisateurs**
Anlage zum zentralen Verwalten von Nachrichten für Teilnehmer mit entsprechenden Kennungen
Installation for centralized management of message data corresponding to subscriber identities

(30) Priorité: 04.11.2002 FR 0213736
(43) Date de publication de la demande: 06.05.2004
(73) Titulaire: ALCATEL, 75008 Paris (FR)
(72) Inventeur: Desurvire, Emmanuel, 91410 St Escobille (FR)
(74) Mandataire: Chaffraix, Sylvain

(56) Documents cités:
- EP-A- 0 831 664
- EP-A- 1 073 290
- WO-A-99/37070
- WO-A-99/65256

## Description

L'invention concerne le domaine de la messagerie, et plus particulièrement celui de la gestion de données de messagerie.

On entend ici par données de messagerie, des données constituant un message, qu'il soit sous la forme d'image(s) fixe(s) ou enchaînées, de texte ou d'enregistrement sonore.

Il est de plus en plus fréquent que des personnes disposent de plusieurs messageries, comme par exemple une ou plusieurs messageries téléphoniques et/ou une ou plusieurs messageries électroniques, de type courrier électronique (ou « e-mail ») ou télécopie. La consultation de ces diverses messageries nécessitant de nombreuses opérations, notamment de connexion, sur des machines éventuellement différentes implantées en des endroits éventuellement différents, il a été proposé des systèmes permettant de regrouper dans une « boîte aux lettres » unifiée tous les messages concernant un même utilisateur. C'est notamment le cas du système Nextenso de la société ALCATEL. Ainsi, pour accéder à l'ensemble de ses messages l'utilisateur n'a plus qu'à se connecter au système de regroupement de messages, via un terminal de communications tel qu'un téléphone mobile, par exemple de type GPRS ou UMTS, ou un ordinateur fixe ou portable.

Ce type de système est certes particulièrement avantageux, mais il contraint encore l'utilisateur à effectuer des opérations qui lui interdisent, pratiquement, de faire autre chose simultanément. En d'autres termes, les systèmes actuels ne permettent pas un fonctionnement de type « main-libre ». En outre, l'utilisation de ces systèmes via des terminaux mobiles, tels que des téléphones mobiles, demeure mal aisée, notamment lorsqu'il s'agit de lire des messages assez longs ou d'afficher des images fixes ou enchaînées.

Par exemple, les document EP 1 073 290 et EP 0 831 664 tous les deux décrivent un système de messagerie capable d'émettre des messages à un dispositif portable. Le système émit des signaux de demande et reçoit un identifiant du dispositif portable comme réponse. Cet identifiant est lié à l'utilisateur. En même temps ce dispositif portable est capable de diffuser ces messages reçus du système pour l'utilisateur du dispositif portable.

L'invention a donc pour but d'améliorer la situation.

Elle propose à cet effet une installation de gestion de données de messagerie comprenant :
- des moyens de messagerie pouvant recevoir des données de messagerie en correspondance d'identifiants d'utilisateurs,
- un ou plusieurs moyens de diffusion (par affichage et/ou acoustique),
- au moins un dispositif capable de fournir un identifiant primaire représentatif d'un identifiant d'utilisateur,
- des moyens de détection capables de détecter des identifiants primaires délivrés par le dispositif et de les transmettre, et
- des moyens de gestion capables, chaque fois qu'ils reçoivent un identifiant primaire transmis par les moyens de détection, de déterminer l'identifiant d'utilisateur associé, puis de rechercher parmi les données de messagerie reçues par les moyens de messagerie celles qui sont associées à l'identifiant d'utilisateur déterminé et, en présence de telles données, d'ordonner leur diffusion par l'un au moins des moyens de diffusion.

Ainsi, dès que le dispositif d'un utilisateur est détecté, les moyens de gestion en sont immédiatement avertis et ils peuvent déterminer parmi les messages reçus par les différents moyens de messagerie tout ou partie de ceux qui sont associés à l'identifiant primaire du dispositif, de sorte que les éventuels messages soient diffusés sans que l'utilisateur n'ait à effectuer la moindre opération.

L'installation selon l'invention pourra comporter de nombreuses caractéristiques complémentaires qui pourront être prises séparément et/ou en combinaison, et en particulier :
- des moyens de détection pouvant comporter une multiplicité de capteurs, implantés en des endroits choisis de zones dans lesquelles peuvent circuler des utilisateurs équipés d'un dispositif, couplés aux moyens de gestion, et capables d'interagir avec chaque dispositif pour obtenir l'identifiant primaire associé. Dans ce cas, il est avantageux de prévoir une multiplicité de moyens de diffusion (par affichage et/ou acoustique) associés chacun à l'une des zones. Par ailleurs, d'une première part, chaque capteur peut être avantageusement associé à un identifiant secondaire et capable de transmettre aux moyens de gestion l'identifiant primaire détecté et son propre identifiant secondaire, d'une deuxième part, chaque moyen de diffusion peut être associé à un identifiant tertiaire, lui-même associé à au moins un identifiant secondaire, d'une troisième part, l'installation peut également comprendre une mémoire stockant les identifiants secondaires en correspondance de chaque identifiant tertiaire, et d'une quatrième part, les moyens de gestion peuvent être agencés, chaque fois qu'ils reçoivent un couple d'identifiants primaire et secondaire, de manière à extraire de la mémoire l'identifiant tertiaire associé à l'identifiant secondaire reçu, afin que les données de messagerie associées à l'identifiant d'utilisateur associé à l'identifiant primaire reçu puissent être diffusées par le moyen de diffusion qui est associé à l'identifiant tertiaire extrait de la mémoire ;
- certains au moins des moyens de diffusion peuvent être des moyens d'affichage, comme par exemple des moniteurs (écrans plats ou postes de télévision) ou des moniteurs de terminal de communications (ordinateur fixe ou portable ou téléphone fixe ou mobile) raccordé à un réseau de téléphonie. En variante, ou en complément, certains moyens d'affichage peuvent être des projecteurs de données d'image ;
- certains au moins des moyens de diffusion peuvent être des moyens de diffusion acoustique, comme par exemple des haut-parleurs ;
- des moyens de messagerie comprenant des premiers moyens de messagerie électronique et des seconds moyens de messagerie téléphonique. De tels premiers moyens de messagerie électronique peuvent être au moins partiellement implantés dans un terminal de communications raccordé à un serveur de messagerie électronique via un premier réseau de communications. De même, les seconds moyens de messagerie vocale peuvent être au moins partiellement implantés dans un téléphone raccordable, éventuellement, à un serveur de messagerie vocale via un second réseau de communications. Bien entendu, les premier et second réseaux de communications peuvent être identiques, et il pourra s'agir de réseaux de communications publics, par exemple de type PSTN, PLMN, i-Mode ou Internet (IP), ou de réseaux privés, par exemple de type PABX ou passerelle de communications privée ;
- des moyens de transmission couplés au moins aux moyens de gestion, aux moyens de diffusion, et aux moyens de détection. Ces moyens de transmission pourront être choisis parmi les moyens de transmission par voie d'ondes (comme par exemple les émetteurs/récepteurs infrarouges) et par voie filaire (comme par exemple les bus d'échange de données) ;
- chaque moyen de détection peut être agencé de manière à effectuer une détection de présence dans une partie au moins de la zone dans laquelle il est implanté, de manière à n'adresser des signaux à destination des dispositifs qu'en cas de détection de présence ;
- plusieurs dispositifs pouvant être associés à des identifiants primaires différents ;
- des dispositifs pouvant être de type passif ;
- des dispositifs pouvant être agencés de manière à transmettre par voie d'ondes leur identifiant primaire. Dans ce cas, la transmission peut être effectuée de façon spontanée, par exemple périodiquement, ou en réponse à des signaux transmis par voie d'ondes par les moyens de détection ;
- chaque dispositif peut comporter un organe qui, lorsqu'il est actionné par un utilisateur, permet d'activer ou de désactiver son fonctionnement ;
- des premiers moyens de conversion capables de convertir des données de messagerie de type textuel en données de messagerie de type sonore ;
- des seconds moyens de conversion pouvant permettre de convertir des données de messagerie de type sonore en données de messagerie de type textuel ;
- des moyens de capture acoustique couplés aux moyens de gestion et capables de capter des paroles émises par un utilisateur et de les convertir en données numériques. Dans ce cas, les moyens de gestion sont avantageusement capables, lorsqu'ils reçoivent de telles données numériques de conversion, de générer à destination des moyens de messagerie des commandes représentatives d'opérations de messagerie à effectuer. Parmi ces opérations de messagerie, on peut notamment citer la réponse à un message choisi, la sauvegarde ou la suppression d'un message choisi, la sélection d'un message choisi parmi une liste de messages préalablement affichés sous forme d'icônes à l'aide de l'un au moins des moyens d'affichage ou présentés sous forme vocale à l'aide des moyens de diffusion acoustique, en vue de l'affichage des données sur l'un au moins des moyens d'affichage ou de la diffusion des données sonores à l'aide de ces moyens de diffusion acoustique, l'agrandissement des données textuelles ou d'image d'un message choisi, la rediffusion de données sonores d'un message choisi, l'ouverture d'un fichier attaché à un message choisi, et le défilement de texte (ou « scrolling ») ;
- des moyens de gestion pouvant être de type configurable. Dans ce cas la configuration peut porter sur le mode d'interrogation des moyens de messagerie (par exemple de type périodique) et/ou sur un premier type des données de messagerie à diffuser (par exemple représentatif d'un premier niveau de priorité fonction de l'adresse de l'émetteur des données de messagerie) et/ou sur un second type des données de messagerie à diffuser (par exemple représentatif d'un second niveau de priorité fonction de l'identifiant d'utilisateur associé à un identifiant primaire reçu). Par ailleurs, les moyens de gestion peuvent être configurés via une interface utilisateur de terminal.

L'invention concerne également un dispositif de gestion de données de messagerie comprenant des moyens de gestion propres à être utilisés dans une installation du type de celle présentée ci-avant. Un tel dispositif pourra également comprendre les premiers et/ou les seconds moyens de conversion présentés ci-avant.

D'autres caractéristiques et avantages de l'invention apparaîtront à l'examen de la description détaillée ci-après, et des dessins annexés, sur lesquels :
- la figure 1 illustre de façon schématique un exemple d'installation selon l'invention, implantée dans une maison,
- la figure 2 illustre de façon schématique un exemple de réalisation d'un boîtier de gestion de données de l'installation selon l'invention,
- la figure 3 illustre de façon schématique un premier exemple de réalisation d'un dispositif de signalisation de présence de l'installation selon l'invention, et
- la figure 4 illustre de façon schématique un second exemple de réalisation d'un dispositif de signalisation de présence de l'installation selon l'invention.

Les dessins annexés pourront non seulement servir à compléter l'invention, mais aussi contribuer à sa définition, le cas échéant.

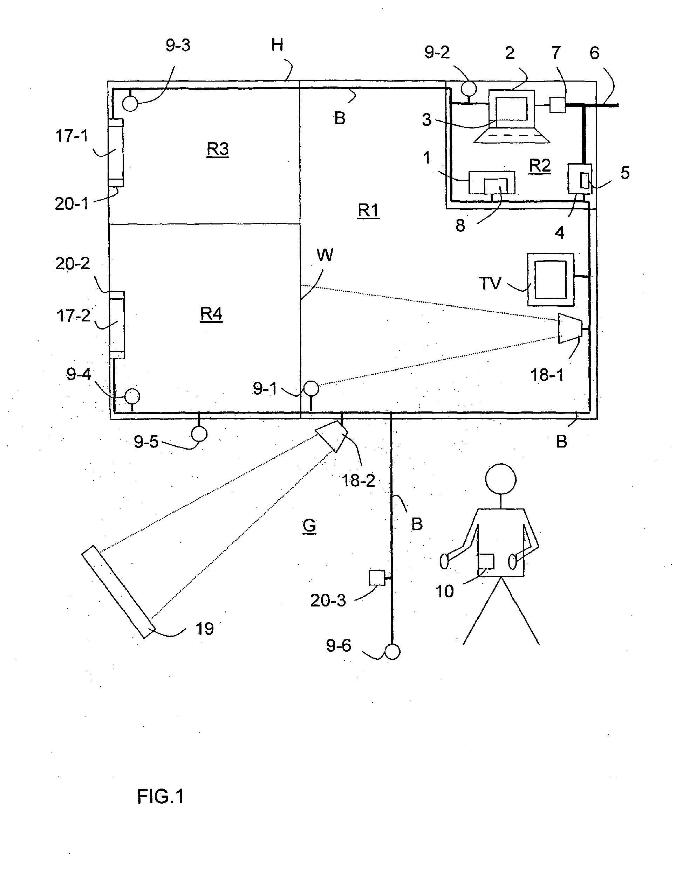

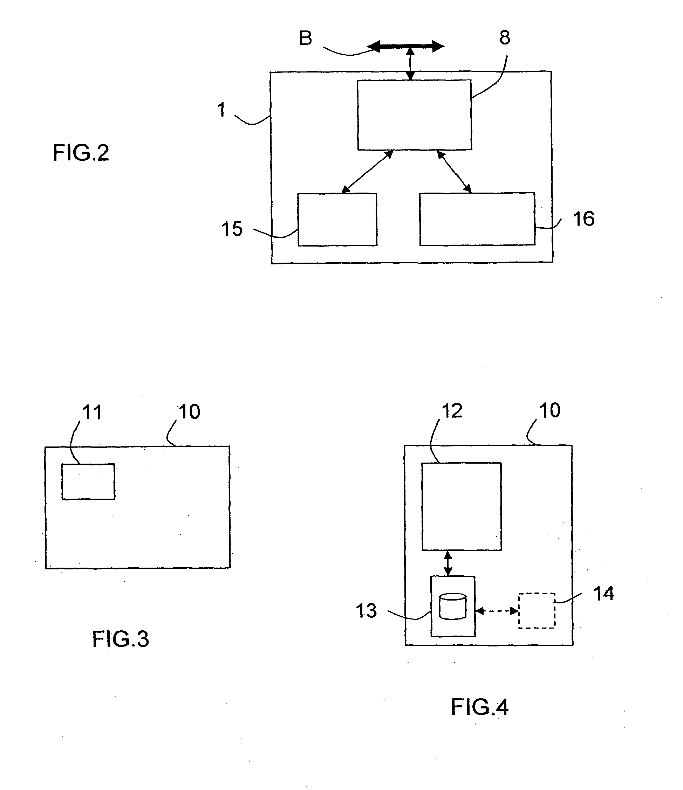

On se réfère tout d'abord aux figures 1 et 2 pour décrire un exemple de réalisation d'une installation de gestion de données de messagerie selon l'invention.

Dans cet exemple, l'installation est implantée dans une maison H entourée d'un jardin G et comportant quatre pièces d'habitation Ri (i = 1 à 4). Bien entendu, l'invention n'est pas limitée à cet exemple d'implantation. Elle s'applique d'une manière générale à tout type de local dans lequel peuvent circuler des personnes, et notamment aux locaux d'entreprises, qu'il s'agisse de bureaux, de salles d'expérimentation ou d'usines. En fait, l'invention est particulièrement bien adaptée à tous les environnements dans lesquels la lecture ou l'audition de messages doit s'opérer sans intervention manuelle, ou avec un minimum d'interventions manuelles basiques, comme c'est notamment le cas dans les salles blanches ou les enceintes confinées.

L'installation comporte tout d'abord un dispositif de gestion 1 qui, dans cet exemple, est réalisé sous la forme d'un boîtier dédié. Ce dispositif 1 est destiné à gérer des données de messagerie qui sont reçues par des modules de messageries implantés, au moins partiellement, dans des terminaux de communications. Ici, on prévoit, d'une part, un ordinateur 2 équipé d'un premier module de messagerie 3, comme par exemple la boîte de réception mise à disposition par le fournisseur d'accès à Internet auquel est abonné l'utilisateur, qui lui permet d'émettre et de recevoir des messages électroniques (par exemple de type « e-mail », avec les éventuels fichiers attachés, ou de type audio et/ou vidéo), et d'autre part, un téléphone 4 équipé d'un second module de messagerie 5, comme par exemple un répondeur analogique ou numérique, qui lui permet de recevoir et d'enregistrer des messages sonores. Le répondeur présente généralement l'inconvénient d'enregistrer des messages indépendamment de l'identifiant de leur auteur (ou appelant).

Le téléphone 4 est relié à un réseau téléphonique, par exemple de type PSTN, via une liaison 6. Par ailleurs, l'ordinateur 2 est relié au serveur de messagerie de son fournisseur d'accès à Internet, via un modem 7, la liaison 6 et le réseau téléphonique. Dans cet exemple, le téléphone 4 et l'ordinateur 2 sont reliés à un même réseau de communications, mais il pourrait en être autrement. Par ailleurs, dans cet exemple le premier module de messagerie 3 est destiné à recevoir des messages de type e-mail, mais on peut envisager que ce premier module de messagerie 3 soit tout ou partie d'un dispositif de messagerie unifiée, comme par exemple le système Nextenso précité, permettant ainsi de récupérer dans une unique boîte aux lettres des messages de différents types (e-mail, audio, vidéo, télécopie, et analogues). On peut même envisager qu'il n'y ait qu'un seul module de messagerie assurant les fonctions des premier 3 et second 5 modules de messagerie.

Les données de messagerie, notamment celles reçues par le premier module de messagerie 3, sont associées à un identifiant d'utilisateur et stockées dans une mémoire en correspondance de leur identifiant d'utilisateur afin de pouvoir être lues à tout moment.

Le dispositif de gestion 1 comporte un module de gestion 8 chargé, lorsqu'il est sollicité, comme on le verra plus loin, de rechercher parmi les données de messagerie reçues par les premier 3 et second 5 modules de messagerie celles qui sont associées à un identifiant primaire représentatif d'un identifiant d'utilisateur, préalablement déterminé par des moyens de détection 9-j (ici j = 1 à 6).

Les moyens de détection sont, par exemple, des capteurs 9-j chargés chacun de détecter, dans des zones choisies, la présence de dispositifs de signalisation de présence 10 équipant des utilisateurs. Par exemple, comme illustré, chaque pièce Ri est équipée d'un capteur 9-j, tandis que le jardin G est équipé de deux capteurs (9-5 et 9-6) associés, de préférence, à des zones de détection au moins partiellement différentes.

En l'absence de jardin, on peut envisager d'équiper d'autres lieux privatifs intérieurs ou extérieurs, comme par exemple une cave ou un parking.

Chaque dispositif de signalisation de présence 10 est associé à un identifiant primaire représentatif d'un identifiant d'utilisateur. Par ailleurs, chaque dispositif de signalisation de présence 10 est chargé d'interagir avec le capteur 9-j dans la zone de détection duquel il se trouve, de sorte que celui-ci puisse déterminer son identifiant primaire. Pour ce faire plusieurs types d'interaction peuvent être envisagés.

Dans un premier mode de réalisation, illustré sur la figure 3, le dispositif de signalisation de présence 10 est de type passif. Il est par exemple constitué d'une carte contenant une puce électronique 11 dans laquelle se trouvent stockées les données représentatives de l'identifiant primaire associé à ladite carte. Dans ce cas, les capteurs 9-j sont équipés de manière à lire à distance l'identifiant primaire stocké dans la puce 11. Ils sont par exemple constitués d'un émetteur/récepteur infrarouge du type de ceux utilisés dans le domaine du contrôle d'accès à des locaux ou à des autoroutes à péage.

Mais, bien entendu, tout autre moyen capable d'obtenir à distance des informations permettant de remonter à l'identifiant primaire associé à une carte 10, sans que celle-ci ne soit obligée de faire appel à une source d'énergie propre, peuvent être envisagés. Ainsi, on peut envisager une interaction par induction électromagnétique, voire même une interaction optique dans l'hypothèse où le dispositif de signalisation de présence 10 est équipé d'un élément pouvant être lu par un lecteur optique, comme par exemple un hologramme, un code barre, ou analogue.

Il est cependant préférable que dans ce mode de réalisation le capteur 9-j soit capable d'interagir avec la carte 10 au travers de vêtements ou de sacs, de sorte que l'utilisateur de la carte n'ait pas à la manipuler ou à l'accrocher à l'extérieur de ses vêtements.

Dans un second mode de réalisation, illustré sur la figure 4, le dispositif de signalisation de présence 10 est de type actif. Il est par exemple constitué d'un petit boîtier dédié contenant un émetteur simple ou un émetteur/récepteur 12, par exemple de type infrarouge, capable de transmettre par voie d'ondes à destination des capteurs 9-j des données représentatives de l'identifiant primaire associé audit boîtier. Dans ce cas, le boîtier comprend une source d'alimentation autonome 13, comme par exemple une pile de petite taille, couplée à l'émetteur ou à l'émetteur/récepteur 12.

Si le boîtier 10 comporte un émetteur simple 12, deux cas peuvent être envisagés. Dans le premier cas, l'émission des données représentatives de l'identifiant primaire s'effectue de manière spontanée, par exemple périodiquement (typiquement toutes les secondes). Les capteurs 9-j peuvent donc être de conception particulièrement simple puisqu'ils n'ont pas besoin de fonctionner en émission pour interagir avec les dispositifs de signalisation de présence 10. De plus, cela permet de réaliser des dispositifs de signalisation de présence 10 particulièrement simples, mais à consommation d'énergie importante, d'autant plus que la puissance requise en émission doit être relativement importante si l'on souhaite qu'elle traverse les vêtements ou les sacs pour les raisons évoquées ci-avant. Une variante de cette solution consiste à équiper, d'une part, les capteurs 9-j d'un émetteur/récepteur chargé d'émettre des signaux d'activation, et d'autre part, l'émetteur 12 des dispositifs de signalisation de présence 10 d'un mécanisme de veille susceptible d'être activé par les signaux d'activation qu'ils reçoivent lorsqu'ils sont dans la zone de détection d'un capteur.

Dans le second cas, comme illustré en pointillés sur la figure 4, les dispositifs de signalisation de présence 10 sont équipés d'un organe d'activation 14 couplé à la source d'alimentation 13 et pouvant être actionné par un utilisateur de manière à activer et désactiver, par exemple par pression(s), l'alimentation de l'émetteur 12 pour l'autoriser à émettre ou l'interdire d'émettre. Comme dans le cas précédent, les capteurs 9-j peuvent être de conception particulièrement simple puisqu'ils n'ont pas besoin de fonctionner en émission pour interagir avec les dispositifs de signalisation de présence 10. De plus, les dispositifs de signalisation de présence 10 demeurent de conception simple, et leur consommation énergétique peut être contrôlée par l'utilisateur.

Si le boîtier 10 comporte un émetteur/récepteur 12, deux cas peuvent être également envisagés. Dans le premier cas, le boîtier 10 émet des données représentatives de l'identifiant primaire en réponse à un message transmis par un capteur 9-j, qui doit par conséquent être équipé d'un émetteur/récepteur. Préférentiellement, le message transmis par le capteur 9-j est constitué de signaux d'activation destinés à activer un mécanisme de veille couplé à la source d'alimentation du boîtier 10, comme indiqué précédemment. Mais, en variante, l'émetteur/récepteur 12 du boîtier peut être alimenté en permanence.

Dans le second cas, comme illustré en pointillés sur la figure 4, les dispositifs de signalisation de présence 10 sont équipés d'un organe d'activation 14 couplé à la source d'alimentation 13 et pouvant être actionné par un utilisateur de manière à activer et désactiver, par exemple par pression(s), l'alimentation de l'émetteur 12 pour l'autoriser à émettre ou l'interdire d'émettre. Une fois alimenté, l'émetteur/récepteur 12 d'un boîtier 10 est alors en mesure de répondre aux messages qu'il reçoit d'un capteur lorsqu'il se trouve placé dans sa zone de détection.

La détermination de l'identifiant primaire associé à un dispositif de signalisation de présence 10 peut être éventuellement précédée par une détection de présence de l'utilisateur qui est équipé de ce dispositif, par les capteurs 9-j. C'est notamment avantageux lorsque le dispositif de signalisation de présence 10 n'émet pas son identifiant primaire « en continu » (ou de façon spontanée). Tout type de détection, adapté au lieu faisant l'objet de la surveillance, peut être envisagé, et notamment ceux habituellement utilisés dans le domaine de la surveillance de locaux ou d'environs de locaux, comme par exemple des parkings.

Dans ce cas, ce n'est qu'une fois qu'un capteur 9-j a détecté la présence d'une personne dans sa zone de détection, qu'il initie la phase de détermination de l'identifiant primaire du dispositif de signalisation de présence 10 qui équipe éventuellement la personne détectée.

Lorsqu'un capteur 9-j est en possession des données représentatives de l'identifiant primaire d'un dispositif de signalisation de présence 10, il doit le communiquer immédiatement au dispositif de gestion 1, et plus précisément à son module de gestion 8 afin qu'il les traite. Tout type de transmission peut être envisagé, que se soit par voie filaire ou par voie d'ondes, dès lors qu'elle est adaptée à la configuration du lieu. Dans le cas d'une transmission par voie filaire, comme illustré sur la figure 1, on peut par exemple utiliser un bus B électronique ou optique. Dans le cas d'une transmission par voie d'ondes, on peut par exemple utiliser la technologie radio « Bluetooth » ou l'infrarouge, en implantant éventuellement des relais en des endroits appropriés. On peut également envisager une combinaison de plusieurs types de transmission différents, y compris des transmissions mixtes (par voie filaire et par voie d'ondes), notamment dans le cadre d'applications implantées dans des lieux ou locaux distants.

Tous les équipements de l'installation sont donc préférentiellement reliés via les moyens de transmission (ici un bus B) au dispositif de gestion 1. Mais, on peut envisager que la liaison entre le dispositif de gestion et l'ordinateur 2 et/ou le téléphone 4 s'effectue d'une autre façon, par exemple par un mécanisme radio, tel que Bluetooth, ou infrarouge.

Lorsque le module de gestion 8 reçoit des données représentatives de l'identifiant primaire d'un dispositif de signalisation de présence 10, il doit tout d'abord déterminer l'identifiant d'utilisateur qui est associé à cet identifiant primaire. Pour ce faire, comme illustré sur la figure 2, le dispositif de gestion 1 comporte préférentiellement une première mémoire 15 dans laquelle se trouve stockée une table de correspondance identifiants primaires/identifiants d'utilisateurs. Bien entendu, dans une variante, la première mémoire 15 pourrait être implantée ailleurs que dans le dispositif de gestion, comme par exemple dans l'ordinateur 2.

En accédant à la première mémoire 15, le module de gestion 8 peut déterminer le (ou les) identifiant(s) d'utilisateur(s) qui est (sont) associé(s) à l'identifiant primaire reçu. Une fois en possession de l'identifiant d'utilisateur, le module de gestion 8 doit déterminer si les différents modules de messagerie (ici le premier 3 au moins partiellement implanté dans l'ordinateur 2 et le second 5 au moins partiellement implanté dans le téléphone 4) ont reçu des messages associés à l'identifiant de l'utilisateur déterminé dans la première mémoire 15. Pour ce faire deux cas peuvent être envisagés selon le mode d'obtention de message choisi.

Les messages peuvent en effet être stockés soit dans un ou plusieurs serveurs de messagerie accessibles via la liaison de communications 6, ou dans les mémoires associés aux premier 3 et second 5 modules de messagerie, soit dans une seconde mémoire 16 du dispositif de gestion 1, comme illustré sur la figure 2. Cela résulte du fait que les équipements de communications 2 et 4 ne sont pas forcément en fonctionnement permanent, ou lorsque c'est le cas que leurs modules de messagerie ne sont pas forcément en état de veille (situation dans laquelle ils reçoivent automatiquement les messages des serveurs de messagerie afin de les stocker dans une mémoire). En outre, on peut envisager que le module de gestion 8 soit agencé de manière à interroger périodiquement, par exemple toutes les heures ou bien une fois par jour, les premier 3 et second 5 modules de messagerie de sorte qu'ils lui communiquent, en vue de les stocker dans la seconde mémoire 16, tous les messages qu'ils ont reçus associés à leurs identifiants d'utilisateurs respectifs, ou qu'ils aillent chercher dans les serveurs de messagerie lesdits messages. Dans cette dernière situation, lorsque les équipements 2 et 4, dans lesquels sont implantés les modules de messagerie 3 et 5, ne sont pas en fonctionnement au moment de l'interrogation, on peut envisager que le module de gestion 8 leur adresse une commande d'établissement de connexion.

Un premier cas concerne donc la situation dans laquelle les modules de messagerie 3 et 5 reçoivent en permanence ou régulièrement les messages qui leurs sont destinés. Dans ce cas, soit le module de gestion 8 est configuré de manière à interroger régulièrement les modules de messagerie 3 et 5 pour stocker leurs éventuels messages dans la seconde mémoire 16, indépendamment de la réception d'un identifiant primaire, soit le module de gestion 8 est configuré de manière à interroger les modules de messagerie 3 et 5, pour stocker leurs messages dans la seconde mémoire 16, lorsqu'il reçoit un identifiant primaire. Une fois les messages stockés dans la seconde mémoire 16, le module de gestion 8 peut alors déterminer ceux qui sont associés à l'identifiant d'utilisateur, puis les extraire pour les adresser à des moyens de diffusion sur lesquels on reviendra plus loin.

En variante, on peut se passer de la seconde mémoire 16. Dans ce cas, le module de gestion 8 détermine dans chacun des modules de messagerie 3 et 5 s'ils ont reçu des messages associés à l'identifiant d'utilisateur, et dans cette éventualité il les extraits pour les adresser aux moyens de diffusion.

Par ailleurs, la seconde mémoire peut être implantée (partagée), par exemple, dans l'ordinateur 2.

Un second cas concerne la situation dans laquelle les modules de messagerie 3 et 5 ne sont pas connectés à leurs serveurs de messagerie distants respectifs. Dans ce cas, le module de gestion 8 leur adresse une commande d'établissement de connexion et d'extraction de tous les messages, indépendamment de l'identifiant d'utilisateur utilisé, ou bien des seuls messages associés à l'identifiant d'utilisateur déterminé. Une fois les messages rapatriés dans les premier 3 et second 5 modules de messagerie soit ils sont stockés dans la seconde mémoire 16 puis éventuellement sélectionnés en fonction de l'identifiant d'utilisateur déterminé, soit ils sont directement sélectionnés et extraits au niveau des premier 3 et second 5 modules de messagerie, puis adressés aux moyens de diffusion.

La détection d'identifiant primaire effectuée par les capteurs 9-j a pour but de permettre la diffusion en « temps réel », par des moyens de diffusion (par affichage et/ou acoustique), des éventuels messages destinés à l'utilisateur dont le dispositif de signalisation de présence 10 a été détecté.

A cet effet, l'installation de gestion comporte au moins un moyen de diffusion couplé, via les moyens de transmission (ici un bus B), au dispositif de gestion 1, ou au moins aux modules de messagerie 3 et 5 (lorsque les messages ne sont pas stockés dans la seconde mémoire 16).

De préférence, comme illustré sur la figure 1, on prévoit plusieurs moyens de diffusion, et plus préférentiellement encore on prévoit au moins un moyen de diffusion dans chacune des principales pièces d'habitation Ri ainsi qu'éventuellement dans le jardin G (ou d'une manière générale dans une zone privative intérieure ou extérieure). De la sorte, les éventuels messages destinés à l'utilisateur « détecté » peuvent être diffusés par au moins l'un des moyens de diffusion de l'installation. Il est cependant particulièrement avantageux de diffuser les messages à l'aide du moyen de diffusion qui est situé à proximité (ou dans le voisinage) du capteur 9-j qui a détecté le dispositif de signalisation de présence 10 de l'utilisateur. A cet effet, on associe, d'une part, à chaque capteur 9-j un identifiant secondaire, et d'autre part, à chaque moyen de diffusion un identifiant tertiaire, lui-même associé à au moins un identifiant secondaire. Préférentiellement, ces identifiants sont stockés dans une seconde table de correspondance identifiants secondaires/identifiants tertiaires de la première mémoire 15.

Dans ce cas, lorsqu'un capteur 9-j détecte un identifiant primaire, il transmet au module de gestion 8 non seulement les données représentatives de cet identifiant primaire mais également les données représentatives de son propre identifiant secondaire. A réception de ces données, le module de gestion 8 effectue, d'une part, la détermination des messages associés à l'identifiant d'utilisateur qui est associé dans la première table de correspondance à l'identifiant primaire reçu, et d'autre part, la détermination de l'identifiant tertiaire qui est associé dans la seconde table de correspondance à l'identifiant secondaire reçu. De la sorte, les éventuels messages destinés à l'utilisateur peuvent être adressés via le bus B au moyen de diffusion qui est associé au capteur 9-j qui a détecté le dispositif de signalisation de présence 10 de cet utilisateur.

On décrit ci-après un exemple de mise en oeuvre de l'installation dans lequel les moyens de diffusion de messages sont des moyens d'affichage.

Dans l'exemple d'installation de la figure 1, trois types de moyens d'affichage ont été illustrés. Un premier type est constitué de moniteurs à écrans plats électroniques 17-1 et 17-2, par exemple de type LCD ou plasma, respectivement implantés dans les pièces R3 et R4. Un deuxième type est constitué de l'écran du moniteur de l'ordinateur 2 implanté dans la pièce R2. Un troisième type est constitué de projecteurs 18-1 et 18-2, respectivement implantés dans la pièce R1 et dans le jardin G. Dans l'exemple illustré, les images générées par les projecteurs 18-1 et 18-2 sont respectivement affichées sur un mur blanc W de la pièce R1 et sur un écran synthétique 19 installé dans le jardin G. On peut également envisager d'utiliser le poste de télévision TV installé dans la pièce R1 en remplacement ou en complément du projecteur 18-1.

A titre d'exemple illustratif, si le capteur 9-6 détecte l'arrivée dans le jardin G d'un utilisateur équipé d'un dispositif de signalisation de présence 10, le module de gestion 8 provoque l'affichage des éventuels messages destinés à cet utilisateur sur l'écran synthétique 19, à l'aide du projecteur 18-2. En revanche, si l'utilisateur est « détecté » dans la pièce R1 par le capteur 9-1, les éventuels messages qui lui sont destinés sont affichés sur le mur W à l'aide du projecteur 18-1 (et/ou sur l'écran du poste de télévision TV).

Par ailleurs, dans ce mode de réalisation à affichage sélectif, il est préférable que l'affichage au niveau de l'un des moyens d'affichage cesse dès que le dispositif de signalisation de présence 10 n'est plus dans la zone de détection du capteur 9-j. En d'autres termes, le module de gestion 8 est agencé de manière à autoriser l'affichage de messages au niveau d'un moyen d'affichage tant qu'il reçoit des données du capteur 9-j associé. Cela permet ainsi de suivre l'utilisateur dans ses déplacements tout en libérant les moyens d'affichage auxquels il ne peut plus accéder. Par exemple, lorsque l'utilisateur quitte la zone de détection du capteur 9-6 pour pénétrer dans la pièce R1, ledit capteur 9-6 ne transmet plus de données au module de gestion 8, tandis que le capteur 9-1 commence à lui transmettre des données. Cela se traduit par l'arrêt de l'affichage des messages sur l'écran synthétique 19 et le début de l'affichage de ces mêmes messages sur le mur W à l'aide du projecteur 18-1 (et/ou sur l'écran du poste de télévision TV).

Certains messages pouvant être de type sonore (c'est notamment le cas des messages téléphoniques), ils peuvent être soit affichés après une conversion de type vocal/textuel, soit diffusés, à l'aide de moyens de diffusion acoustique tels que des hauts parleurs 20-1 à 20-3, dans la pièce Ri ou le jardin G où se trouve l'utilisateur du dispositif de signalisation de présence 10 détecté. Il peut bien entendu s'agir de haut-parleurs intégrés dans un moniteur à écran plat 17 ou dans un ordinateur 2, ou bien d'éléments au moins partiellement indépendants. Comme on le verra plus loin, ces haut-parleurs 20 peuvent être éventuellement implantés dans un boîtier comportant également un microphone raccordé au module de gestion 8. A l'image des moyens d'affichage, on associe un identifiant tertiaire à chaque moyen de diffusion acoustique, et dans ce cas les différents identifiants tertiaires des moyens de diffusion acoustique sont associés aux identifiants secondaires au sein de la seconde table de correspondance.

Pour assurer la conversion de type vocal/textuel, on prévoit un premier module de conversion implanté, de préférence, dans le dispositif de gestion 1, couplé au module de gestion 8.

On peut également prévoir un second module de conversion de type textuel/vocal pour convertir des données de messagerie (ou messages) textuelles en données sonores. Un tel module est alors implanté, de préférence, dans le dispositif de gestion 1, couplé au module de gestion 8. Grâce à une telle conversion de type textuel/vocal, on peut envisager une installation dépourvue de moyens d'affichage, et uniquement pourvue de moyens de diffusion acoustique 20. Dans ce cas, tous les messages textuels font l'objet d'une conversion préalable textuel/vocal avant d'être diffusés via des haut-parleurs (ou de tout autre moyen acoustique, comme par exemple une oreillette raccordée au dispositif de signalisation de présence 10, voire même la sortie sonore du téléphone mobile de l'utilisateur) et la seconde table de correspondance stocke la correspondance entre les identifiants secondaires des capteurs 9-j et les identifiants tertiaires des moyens de diffusion acoustique 20.

Dans ce qui précède, il a été question d'un affichage systématique des messages consécutivement à l'identification d'un utilisateur. Mais, on peut envisager une variante dans laquelle l'affichage des messages destinés à l'utilisateur identifié est effectué lorsque celui-ci délivre une autorisation (ou un ordre) au module de gestion 8. Dans ce cas, une fois l'utilisateur identifié, on peut, par exemple, afficher sur l'écran, associé à la zone dans laquelle l'utilisateur a été identifié, une information lui signalant s'il existe un message en attente qui lui est destiné. A titre d'exemple, la présence d'au moins un message peut être signalée par un carré bleu (éventuellement clignotant), tandis que l'absence de message peut être signalée par un carré noir (éventuellement clignotant). On peut également envisager que les messages à haut niveau de priorité soient signalés par un carré rouge (éventuellement clignotant). En variante, et en présence de moyens de diffusion acoustique, on peut envisager que l'utilisateur identifié soit averti par un message sonore.

Si l'utilisateur souhaite voir (ou entendre) ses messages, il adresse alors au module de gestion 8 une instruction prédéfinie, par la voix (par exemple en prononçant le mot « affichage ») ou par activation d'une touche dédiée si cette option est prévue sur son dispositif de signalisation de présence 10 (cela requiert au moins qu'il soit équipé d'une alimentation autonome et d'un émetteur et que l'installation soit équipée de moyens de réception capables de recevoir les données d'instructions émises). Dans le cas d'une instruction vocale, celle-ci peut être captée par un microphone implanté dans la zone de détection, par exemple dans un boîtier comportant également un haut-parleur, ou dans le dispositif de signalisation de présence 10 (lorsque celui-ci est équipé d'une alimentation autonome et d'un émetteur et que l'installation est équipée de moyens de réception capables de recevoir les données d'instructions émises).

Si l'utilisateur ne souhaite pas voir (ou entendre) ses messages soit il n'adresse pas d'instruction, soit il adresse au module de gestion 8 une instruction prédéfinie, par la voix (par exemple en prononçant le mot « arrêt ») ou par activation d'une touche dédiée si cette option est prévue sur son dispositif de signalisation de présence 10.

Un tel agencement peut également permettre de désactiver l'affichage lorsque l'utilisateur demeure dans une zone de détection mais qu'il ne souhaite plus voir ou écouter ses messages. A cet effet, il peut par exemple, adresser au module de gestion 8 une instruction prédéfinie, par la voix (par exemple en prononçant le mot « arrêt ») ou par activation d'une touche dédiée si cette option est prévue sur son dispositif de signalisation de présence 10.

Par ailleurs, dans ce qui précède, il a été question d'un fonctionnement de l'installation en mode « mono-session » de messages. Mais l'invention s'applique également au fonctionnement en mode « multi-sessions ». Ce fonctionnement est plus particulièrement envisageable lorsque la diffusion des messages s'effectue de façon sélective en fonction de la zone de détection. Dans ce cas, il est en effet possible de configurer le module de gestion 8 de sorte qu'il gère la diffusion de messages, associés à des identifiants d'utilisateurs différents, par des moyens de diffusion différents.

Il est également possible de configurer le module de gestion 8 de sorte qu'il gère des conflits entre utilisateurs présents dans une même zone de détection. Pour ce faire, il suffit d'établir une hiérarchie (ou un niveau de priorité) entre les identifiants d'utilisateurs des différents utilisateurs, puis de fournir ces informations au module de gestion 8. Ainsi, lorsque deux utilisateurs se trouvent dans la même pièce c'est celui qui possède le niveau de priorité le plus élevé qui bénéficie de la diffusion tant qu'il est détecté par le capteur 9-j de cette pièce.

Par ailleurs, il est également possible de configurer le module de gestion 8 de sorte qu'il gère des niveaux de priorité entre messages de types différents et/ou de groupes d'adresses différents. Dans ce cas, le module de gestion 8 peut provoquer la diffusion des messages selon leur niveau de priorité ou bien filtrer certains types de messages de sorte qu'ils ne fassent pas l'objet d'une diffusion immédiate.

En outre, l'installation peut également comprendre des moyens de capture acoustique, tels que des microphones, placés dans le voisinage de certaines au moins des zones de détection et couplés au module de gestion 8 via les moyens de transmission (ici le bus B). De tels moyens de capture acoustique peuvent permettre à un utilisateur d'adresser des commandes vocales au module de gestion 8, de sorte qu'il effectue des opérations de traitement sur les messages qui lui ont été proposés. Tout type d'opération peut être envisagé, et notamment la suppression de message, la rediffusion de message, la sauvegarde de message, le défilement d'un texte (ou « scrolling ») et l'ouverture d'un fichier attaché à un message. Mais on peut également envisager une commande permettant de répondre à un message soit vocalement soit textuellement, par exemple après une conversion de type vocal/textuel.

On peut également configurer le module de gestion 8 de sorte qu'il ne provoque l'affichage initial que d'icônes représentant les messages par exemple par un numéro ou une lettre, éventuellement accompagné d'un niveau de priorité et/ou d'un titre et/ou du nom de l'auteur du message. Par ailleurs, afin de faciliter la sélection des icônes on peut également les personnaliser en fonction de l'auteur du message associé (ceci réclame bien entendu une programmation préalable du module de gestion 8). Ainsi, l'utilisateur peut effectuer sa propre sélection parmi les différentes icônes et demander au module de gestion 8, en fournissant vocalement leur numéro ou lettre, d'afficher le texte et/ou les images du message correspondant. On peut en outre prévoir une commande destinée à provoquer l'agrandissement ou la réduction d'une partie au moins d'un message affiché.

L'utilisation de commandes vocales peut également permettre l'activation de la diffusion sous réserve de la communication d'un mot de passe par l'utilisateur. Dans ce cas, le mot de passe est également stocké, de préférence, dans la première mémoire 15 en correspondance de l'identifiant primaire et de l'identifiant d'utilisateur associé.

L'utilisation de commandes vocales peut en outre permettre un dialogue interactif entre l'utilisateur et le module de gestion 8, notamment, comme indiqué précédemment, pour l'ouverture d'une « session de diffusion » ordonnant l'affichage (ou la diffusion sonore) des messages ou pour la fermeture d'une session, mais également pour la sélection de messages ou l'envoi d'instructions représentatives d'opérations de messagerie et/ou d'archivage à effectuer. Par exemple, le module de gestion 8 peut provoquer l'affichage sur l'écran (ou la diffusion par le haut-parleur) associé à la zone de détection, de questions auxquelles l'utilisateur répond oralement, et rappeler, le cas échéant après un certain temps d'attente (soit sur un écran via une barre de menu, par exemple, soit oralement sous forme d'une liste abrégée, par exemple), les commandes pertinentes qui s'offrent à l'utilisateur à l'instant de la session où il se trouve, comme par exemple continuer, terminer, revenir, pause, et analogues.

La configuration du module de gestion 8 peut être effectuée directement au niveau du dispositif de gestion 1 lorsque celui-ci est équipé d'une interface utilisateur, ou bien à l'aide d'un ordinateur fixe ou portable lorsque celui-ci est équipé du programme de configuration correspondant. On entend ici par configuration, d'une première part, la programmation du mode de fonctionnement du module de gestion (interrogation périodique ou à réception d'un identifiant primaire), d'une deuxième part, la fourniture des première et éventuellement seconde tables de correspondance, et d'une troisième part, la programmation des éventuels différents niveaux de priorités (en fonction des utilisateurs et/ou en fonction du ou des types des messages). On peut également envisager que la sensibilité de détection des capteurs soit programmable.

Dans la description qui précède, il a été fait référence à une installation de gestion de données de messagerie relativement complexe. Mais, l'installation selon l'invention peut être déclinée de nombreuses autres façons dès lors qu'elle comporte au minimum :
- des moyens de messagerie pouvant recevoir des données de messagerie en correspondance d'identifiants d'utilisateurs,
- un ou plusieurs moyens de diffusion de données de messagerie,
- au moins un dispositif capable de fournir un identifiant primaire représentatif d'un identifiant d'utilisateur,
- des moyens de détection capables de détecter des identifiants primaires délivrés par le dispositif et de les transmettre, et
- des moyens de gestion capables, chaque fois qu'ils reçoivent un identifiant primaire transmis par les moyens de détection, de déterminer l'identifiant d'utilisateur associé, puis de rechercher parmi les données de messagerie reçues par les moyens de messagerie celles qui sont associées à l'identifiant d'utilisateur déterminé et, en présence de telles données, d'ordonner leur diffusion par l'un au moins des moyens de diffusion.

Le dispositif de gestion 1 peut être entièrement ou partiellement réalisé sous la forme de circuits électroniques (hardware), de modules logiciels ou informatiques (software), ou d'une combinaison de circuits et de logiciels. Par ailleurs, il peut être implanté dans un boîtier dédié, comme illustré sur la figure 1, ou bien dans un équipement de l'installation comme par exemple un ordinateur fixe ou portable, voire même dans un téléphone fixe ou mobile.

L'invention ne se limite pas aux modes de réalisation d'installation et de dispositif de gestion décrits ci-avant, seulement à titre d'exemple, mais elle englobe toutes les variantes que pourra envisager l'homme de l'art dans le cadre des revendications ci-après.

Ainsi, on a décrit une installation dédiée seulement à la gestion de messages, mais l'invention pourrait également assurer la détection d'intrusion. En effet, lorsque les capteurs assurent à la fois la détection de présence et l'identification, on peut envisager qu'en cas de détection de présence non suivie d'une identification les capteurs adressent au module de gestion un message signalant une intrusion, de sorte que ce dernier déclenche une ou plusieurs alarmes. On peut également envisager que le dispositif de signalisation de présence constitue également un moyen d'accès à un local ou un équipement, comme c'est notamment le cas des clés électroniques au format « carte bancaire ». Dans ce cas, le dispositif de lecture qui équipe le local ou l'équipement est couplé au module de gestion et assure également l'identification de l'utilisateur, de préférence.

Par ailleurs, on a décrit une installation assurant la gestion de messages dans plusieurs pièces d'un bâtiment. Mais, l'invention s'applique également aux installations qui n'assurent la gestion de messages que dans une seule pièce ou dans une unique zone intérieure ou extérieure. Par conséquent, on peut envisager une installation comprenant uniquement une station de communication, telle qu'un ordinateur fixe ou portable, équipée de moyens de messagerie et d'un module de gestion selon l'invention (soit intégré, soit raccordé par voie filaire ou par voie d'ondes), et des moyens de détection couplés audit module de gestion, ainsi qu'au moins un dispositif de signalisation de présence susceptible d'équiper un utilisateur.

En outre, on a décrit des applications dans lesquelles des messages pouvaient être lus, ou non, par un utilisateur identifié auquel ils étaient destinés, sans que cela ne provoque d'action au niveau du module de gestion. Mais, on peut envisager des applications dans lesquelles le module de gestion associe à chaque message soumis à l'utilisateur un identifiant qu'il enregistre, éventuellement sous une forme certifiée. On peut également envisager que le module de gestion soit couplé à un ou plusieurs équipements auxquels l'utilisateur ne peut accéder ou qu'il ne peut utiliser qu'à condition qu'il ait lu ou entendu un message. Par exemple, cette disposition d'accès liée à une « non-répudiation » peut permettre de rappeler les conditions de sécurité à respecter à l'intérieur d'une zone dans laquelle un utilisateur veut pénétrer, ou de communiquer à un visiteur certaines informations (générales ou personnalisées) qu'il doit impérativement connaître. On peut également envisager des applications de formation individualisée ou de présentation de groupe (comme par exemple dans le cadre d'un parcours guidé et interactif au sein d'un complexe industriel, ou d'une usine), ou encore ludiques et/ou sécuritaires et/ou éducatives (par exemple dans le cadre de visites de parcs naturels régionaux ou de centre de loisirs).

## Revendications

1. Installation de gestion de données de messagerie, **caractérisée en ce qu'**elle comprend des moyens de messagerie (3,5) pouvant recevoir des données de messagerie en correspondance d'identifiants d'utilisateurs, au moins un moyen de diffusion de données de messagerie (17-20), au moins un dispositif (10) capable de délivrer un identifiant primaire représentatif d'un identifiant d'utilisateur et distinct du ou des moyens de diffusion, des moyens de détection (9-j) agencés pour détecter des identifiants primaires délivrés par ledit dispositif (10) et les transmettre, et des moyens de gestion (1,8) capables, à réception d'un identifiant primaire transmis par lesdits moyens de détection (9-j), de déterminer l'identifiant d'utilisateur associé, puis de chercher parmi les données de messagerie reçues par lesdits moyens de messagerie (3,5) celles qui sont associées audit identifiant d'utilisateur déterminé et, en présence de telles données, d'ordonner leur diffusion par ledit moyen de diffusion (17-20).

2. Installation selon la revendication 1, **caractérisée en ce que** lesdits moyens de détection (9-j) comportent une multiplicité de capteurs, implantés en des endroits choisis de zones dans lesquelles peuvent circuler des utilisateurs équipés d'un dispositif (10), couplés auxdits moyens de gestion (1,8), et agencés pour interagir avec chaque dispositif (10) pour obtenir l'identifiant primaire associé.

3. Installation selon la revendication 2, **caractérisée en ce qu'**elle comprend une multiplicité de moyens de diffusion (17-20) associés chacun à l'une desdites zones.

4. Installation selon l'une des revendications 2 et 3, **caractérisée en ce que** chaque capteur (9-j) est associé à un identifiant secondaire et est agencé pour transmettre auxdits moyens de gestion (1,8) l'identifiant primaire détecté et son propre identifiant secondaire, **en ce que** chaque moyen de diffusion (17-20) est associé à un identifiant tertiaire associé à au moins un identifiant secondaire, **en ce qu'**elle comprend une mémoire (15) dans laquelle sont stockés lesdits identifiants secondaires en correspondance de chaque identifiant tertiaire, et **en ce que** lesdits moyens de gestion (1,8) sont agencés, à réception d'identifiants primaire et secondaire, pour extraire de ladite mémoire (15) l'identifiant tertiaire associé audit identifiant secondaire reçu, de sorte que les données de messagerie associées à l'identifiant d'utilisateur, associé audit identifiant primaire reçu, soient diffusées par le moyen de diffusion (17-20) associé à l'identifiant tertiaire extrait de ladite mémoire (15).

5. Installation selon l'une des revendications 1 à 4, **caractérisée en ce que** certains au moins desdits moyens de diffusion sont des moyens d'affichage (17-19).

6. Installation selon la revendication 5, **caractérisée en ce que** certains au moins des moyens d'affichage sont des moniteurs (17).

7. Installation selon la revendication 6, **caractérisée en ce que** l'un au moins desdits moniteurs est un moniteur de terminal de communications (2) raccordé à un réseau de téléphonie.

8. Installation selon l'une des revendications 5 à 7, **caractérisée en ce que** certains au moins desdits moyens d'affichage sont des projecteurs de données d'image (18).

9. Installation selon l'une des revendications 1 à 8, **caractérisée en ce que** certains au moins desdits moyens de diffusion sont des moyens de diffusion acoustique (20).

10. Installation selon l'une des revendications 1 à 9, **caractérisée en ce que** lesdits moyens de messagerie (3,5) comprennent des premiers moyens de messagerie électronique (3) et des seconds moyens de messagerie téléphonique (5).

11. Installation selon la revendication 10, **caractérisée en ce que** lesdits premiers moyens de messagerie électronique (3) sont au moins partiellement implantés dans un terminal de communications (2) raccordable à un serveur de messagerie électronique via un premier réseau de communications.

12. Installation selon l'une des revendications 10 et 11, **caractérisée en ce que** lesdits seconds moyens de messagerie téléphonique (5) sont au moins partiellement implantés dans un téléphone (4) raccordable à un second réseau de communications.

13. Installation selon l'une des revendications 11 et 12, **caractérisée en ce que** lesdits premier et second réseaux de communications sont identiques.

14. Installation selon l'une des revendications 11 à 13, **caractérisée en ce que** chaque réseau de communications est choisi dans un groupe comprenant les réseaux publics de type PSTN, PLMN, i-Mode et Internet (IP), et les réseaux privés de type PABX et les passerelles de communication privées.

15. Installation selon l'une des revendications 1 à 14, **caractérisée en ce qu'**elle comprend des moyens de transmission (B) couplés au moins auxdits moyens de gestion (1,8), auxdits moyens de diffusion (17-20), et auxdits moyens de détection (9-j).

16. Installation selon la revendication 15, **caractérisée en ce que** lesdits moyens de transmission (B) sont choisis dans un groupe comprenant les moyens de transmission par voie d'ondes et les moyens de transmission par voie filaire.

17. Installation selon la revendication 16, **caractérisée en ce que** lesdits moyens de transmission par voie filaire comprennent au moins les bus d'échange de données (B).

18. Installation selon l'une des revendications 16 et 17, **caractérisée en ce que** lesdits moyens de transmission par voie d'ondes sont des émetteurs/récepteurs infrarouges.

19. Installation selon l'une des revendications 1 à 18, **caractérisée en ce que** chaque moyen de détection (9-j) est agencé pour, d'une part, effectuer une détection de présence dans une partie au moins de la zone dans laquelle il est implanté, et d'autre part, adresser des signaux à destination desdits dispositifs (10) en cas de détection de présence.

20. Installation selon l'une des revendications 1 à 19, **caractérisée en ce qu'**elle comprend une multiplicité de dispositifs (10) associés à des identifiants primaires différents.

21. Installation selon l'une des revendications 1 à 20, **caractérisée en ce que** chaque dispositif (10) est de type passif.

22. Installation selon la revendication 20, **caractérisée en ce que** chaque dispositif (10) est agencé de manière à transmettre par voie d'ondes son identifiant primaire.

23. Installation selon la revendication 22, **caractérisée en ce que** ladite transmission est spontanée.

24. Installation selon la revendication 22, **caractérisée en ce que** ladite transmission est effectuée en réponse à des signaux transmis par voie d'ondes par lesdits moyens de détection (9-j).

25. Installation selon l'une des revendications 1 à 24, **caractérisée en ce que** chaque dispositif (10) comporte un organe (14) propre à activer ou désactiver son fonctionnement en cas d'actionnement par un utilisateur.

26. Installation selon l'une des revendications 1 à 25, **caractérisée en ce qu'**elle comprend des premiers moyens de conversion propres à convertir des données de messagerie de type textuel en données de messagerie de type sonore.

27. Installation selon l'une des revendications 1 à 26, **caractérisée en ce qu'**elle comprend des seconds moyens de conversion propres à convertir des données de messagerie de type sonore en données de messagerie de type textuel.

28. Installation selon l'une des revendications 1 à 27, **caractérisée en ce qu'**elle comprend des moyens de capture acoustique couplés auxdits moyens de gestion (1,8) et agencés de manière à capter des paroles émises par un utilisateur et à les convertir en données numériques, et **en ce que** lesdits moyens de gestion (1,8) sont agencés, à réception de données numériques de conversion, pour générer à destination desdits moyens de messagerie (3,5) des commandes représentatives d'opérations de messagerie à effectuer.

29. Installation selon la revendication 28, **caractérisée en ce que** lesdites opérations sont choisies dans un groupe comprenant au moins la réponse à un message choisi, la sauvegarde ou la suppression d'un message choisi, la sélection d'un message choisi parmi une liste de messages préalablement affichés sous forme d'icônes à l'aide d'un moyen d'affichage ou diffusés sous forme vocale à l'aide de moyens de diffusion acoustique, en vue de la diffusion des données par ledit moyen d'affichage ou par ledit moyen de diffusion acoustique, l'agrandissement des données textuelles ou d'images d'un message choisi, la rediffusion de données sonores d'un message choisi, et l'ouverture d'un fichier attaché à un message choisi.

30. Installation selon l'une des revendications 1 à 29, **caractérisée en ce que** lesdits moyens de gestion (8) sont de type configurable.

31. Installation selon la revendication 30, **caractérisée en ce que** ladite configuration porte sur le mode d'interrogation desdits moyens de messagerie (3,5).

32. Installation selon la revendication 31, **caractérisée en ce que** ledit mode d'interrogation est de type périodique.

33. Installation selon l'une des revendications 30 à 32, **caractérisée en ce que** ladite configuration porte sur un premier type des données de messagerie à diffuser.

34. Installation selon la revendication 33, **caractérisée en ce que** ledit premier type est représentatif d'un premier niveau de priorité fonction de l'adresse de l'émetteur des données de messagerie reçues.

35. Installation selon l'une des revendications 30 à 34, **caractérisée en ce que** ladite configuration porte sur un second type des données de messagerie à diffuser.

36. Installation selon la revendication 35, **caractérisée en ce que** ledit type est représentatif d'un second niveau de priorité fonction de l'identifiant d'utilisateur associé à un identifiant primaire reçu.

37. Installation selon l'une des revendications 30 à 36, **caractérisée en ce que** lesdits moyens de gestion sont configurables via une interface utilisateur de terminal.

## Claims

1. Messaging data management installation, **characterised in that** is comprises messaging means (3, 5) able to receive messaging data in corresponding relationship to user identifiers, means for playing message data (17-20), a device (10) capable of delivering a primary identifier representative of a user identifier and distinct from the playing means, detection means (9-j) adapted to detect primary identifiers delivered by said device (10) and to transmit them, and management means (1, 8) capable, on receiving a primary identifier transmitted by said detection means (9-j), of determining the associated user identifier and then searching the messaging data received by said messaging means (3, 5) for then associated with said user identifier that has been determined and, in the presence of such data, to instruct playing thereof by said playing means (17-20).

2. Installation according to claim 1, **characterised in that** said detection means (9-j) include a multiplicity of sensors installed at selected locations in areas in which users equipped with a device (10) coupled to said management means (1, 8) may circulate and adapted to interact with each device (10) to obtain the associated primary identifier.

3. Installation according to claim 2, **characterised in that** it comprises a multiplicity of playing means (17-20) each associated with one of said areas.

4. Installation according to either claim 2 or claim 3, **characterised in that** each sensor (9-j) is associated with a secondary identifier and is adapted to send the detected primary identifier and is own secondary identifier to said management means (1, 8), each of said playing means (17-20) is associated with a tertiary identifier associated with a secondary identifier, it comprises a memory (15) in which said secondary identifiers are stored in corresponding relationship to each tertiary identifier, and said management means (1 ,8) are adapted, on reception of primary and secondary identifiers, to extract from said memory (15) the tertiary identifier associated with said received secondary identifier so that messaging data associated with the user identifier associated with said received primary identifier is played by the playing means (17-20) associated with the tertiary identifier extracted from said memory (15).

5. Installation according to any one of claims 1 to 4, **characterised in that** at least some of said playing means are display means (17-19).

6. Installation according to claim 5, **characterised in that** at least some of the display means are monitors (17).

7. Installation according to claim 6, **characterised in that** at least one of said monitors is a monitor (2) of a communication terminal connected to a telephone network.

8. Installation according to any of claims 5 to 7, **characterised in that** at least some of said display means are image data projectors (18).

9. Installation according to any of claims 1 to 8, **characterised in that** at least some of said playing means are audio playing means (20).

10. Installation according to any one of claims 1 to 9, **characterised in that** said messaging means (3, 5) comprise electronic messaging means (3) and telephone messaging means (5).

11. Installation according to claim 10, **characterised in that** said electronic messaging means (3) are at least partly installed in a communication terminal (2).

12. Installation according to either claim 10 claim 11, **characterised in that** said telephone messaging means (5) are at least partially installed in a telephone (4) connectable to a second communication network.

13. Installation according to either claim 11 or claim 12, **characterised in that** said first and second communication networks are identical.

14. Installation according to any one of claims 11 to 13, **characterised in that** each communication network is chosen in a group comprising public networks of PSTN, PLMN, i-mode and Internet (IP) type and private networks of PABX and private communication gateway type.

15. Installation according to any one of claims 1 to 14, **characterised in that** it comprises transmission means (B) coupled at least to said management means (1, 8) said playing means (17-20) and said detection means (9-j).

16. Installation according to claim 15, **characterised in that** said transmission means (B) are chosen in a group comprising wireless transmission means and cable transmission means. 17.

17. Installation according to claim 16, **characterised in that** said cable transmission means comprise at least data exchange buses (8).

18. Installation according to either claim 16 or claim 17, **characterised in that** said wireless transmission means are infrared senders/receivers.

19. Installation according to any one of claims 1 to 18, **characterised in that** each of said detection means (9-j) is adapted, on the hand, to detect presence in at least a part of the area in which it is installed and, on the other hand, to send signals to said devices (10) in the event of presence detection.

20. Installation according to any one of claims 1 to 19, **characterised in that** it comprises a multiplicity of devices (10) associated with different primary identifiers.

21. Installation according to any one of claims 1 to 20, **characterised in that** each device (10) is of passive type.

22. Installation according to claim 20, **characterised in that** each device (10) is adapted to transmit its primary identifier wirelessly.

23. Installation according to claim 22, **characterised in that** said transmission is spontaneous.

24. Installation according to claim 22, **characterised in that** said transmission is effected in response to signals transmitted wirelessly by said detection means (9-j).

25. Installation according to any one of claims 1 to 24, **characterised in that** each device (10) includes a unit (14) adapted to activate or deactivate its operation in (10) includes a unit (14) adapted to activate or deactivate its operation in the event of actuation by a user.

26. Installation according to any one of claims 1 to 25, **characterised in that** it comprises first conversion means adapted to convert text type messaging data into audio type messaging data.

27. Installation according to any one of claims 1 to 26, **characterised in that** it comprises second conversion means adapted to convert audio type messaging data into text type messaging data.

28. Installation according to any one of claims 1 to 27, **characterised in that** it comprises sound capture means coupled to said management means (1, 8) and adapted to capture speech spoken by a user and to convert it into digital data and said management means (1, 8) are adapted, on reception of digital conversion data, to generate commands to said messaging means (3, 5) representative of messaging operations to be effected.

29. Installation according to claim 28, **characterised in that** said operations are chosen in a group comprising at least responding to a chosen message, saving or deleting a chosen message, selecting a chosen message from a list of messages previously displayed in the form of icons with the aid of display means or played in vocal with the aid of acoustic playing means, with a view to the playing of the data by said display means or by said audio playing means, enlarging text or image data of a chosen message, replaying sound data of a chosen message, and opening a file attached to a chosen message.

30. Installation according to any one of claims 1 to 29, **characterized in that** said management means (8) are of configurable type.

31. Installation according to claim 30, **characterised in that** said configuration applies to the mode of consulting said message means (3, 5).

32. Installation according to claim 31, **characterised in that** said consultation mode is of periodic type.

33. Installation according to any one of claims 30 to 32, **characterised in that** said configuration applies to a first type of messaging data to be played.

34. Installation according to claim 33, **characterised in that** said first type of messaging data to be played is representative of a first priority level that is a function of the address of the sender of the received messaging data.

35. Installation according to any one of claims 30 to 34, **characterised in that** said configuration applies to a second type of messaging data to be played.

36. Installation according to claim 35, **characterised in that** said second type of messaging data to be played is representative of a second priority level that is a function of the user identifier associated with a received primary identifier.

37. Installation according to any one of claims 30 to 36, **characterised in that** said management means are configurable via a terminal user interface.

## Patentansprüche

1. Anlage zum Verwalten vom Nachrichten, **dadurch gekennzeichnet, dass** sie Nachrichtendiensmittel (3, 5) enthält, die Nachrichten für Teilnehmer mit entsprechenden Kennungen empfängen können, mindestens ein Mittel zur Verbreitung von Nachrichten (17-20), mindestens eine Vorrichtung (10), die im Stande ist, eine primäre Kennung zu erstellen, die für eine Teilnehmerkennung typisch ist und von dem Mittel oder den Mitteln für die Verbreitung verschieden ist, Mittel zum Erfassen (9-j), die so aufgebaut sind, dass sie die von dieser Vorrichtung (10) erstellten primären Kennungen erfassen und übertragen, und Mittel zum Verwalten (1, 8), die im Stande sind, beim Empfang einer primären Kennung die von diesen Mitteln zur Erfassung (9-j) übertragen wurde, die zuugehörige Teilnehmerkennung zu ermitteln dann unter den von diesen Nachrichtendienstmitteln (3, 5) empfangenen Nachrichten diejenigen zu suchen, die zu dieser ermittelten Teilnehmerkennung gehören und bei Vorliegen solcher Nachrichten, deren Verbreitung durch dieses Mittel zur Verbreitung (17-20) anzuordnen.

2. Anlage gemäß Anspruch 1, **dadurch gekennzeichnet, dass** diese Mittel zum Erfassen (9-1) eine Vielzahl von Sensoren enthalten die an ausgewählten Stellen von Bereichen angensiedelt sind, in denen mit einer Vorrichtung (10) ausgestattete Teilnehmer verkehren können, und an diese Mittel zum Verwalten (1, 8) gekoppelt sind, und die so aufgebaut sind, dass sie mit jeder Vorrichtung (10) interagieren, um die zugehörige primäre Kennung zu erhalten.

3. Anlage gemäß Anspruch 2, **dadurch gekennzeichnet, dass** sie eine Vielzahl von Mitteln zur Verbreitung (17-20) enthält, die jeweils einem dieser Bereiche zugehörig sind.

4. Anlage gemäß Anspruch 2 oder Anspruch 3, **dadurch gekennzeichnet, dass** jeder Sensor (9-j) einer sekundären Kennung zugehörig ist und so aufgebaut ist, dass er an diese Mittel zum Verwalten (1, 8) die erfasste primäre Kennung und seine eigene sekundäre Kennung überträgt, **dadurch gekennzeichnet, dass** jedes Mittel zur Verbreitung (17-20) mit einer tertiären Kennung verknüpft ist, die zu mindestens eine sekendären Kennung gehört, dass sie einen Speicher (15) enthält, in dem diese sekundären Kennungen jeweils mit den entsprechenden tertiären Kennungen gespeichert sind, und **dadurch gekennzeichnet, dass** diese Mittel zum Verwalten (1, 8) so aufgebaut sind, dass sie beim Empfängen von primärer und sekundärer Kennung aus diesem Speicher (15) die tertiäre Kennung herausziehen, die zu dieser empfangenen sekundären Kennung gehört, so dass die Nachrichten, die zu der Teilnehmerkennung zugehörig sind, die mit dieser empfangenen primären Kennung verknüpft ist, durch das Verbreitungsmittel (17-20) verbreitet werden, das zu der tertiären Kennung zugehörig ist, die aus diesem Speicher (15) herausgezogen wurde.

5. Anlage gemäß einem der Ansprüche 1 bis 4, **dadurch gekennzeichnet, dass** mindestens einige dieser Mittel zum Verbreiten Mittel zum Anzeigen (17-19) sind.

6. Anlage gemäß Anspruch 5, **dadurch gekennzeichnet, dass** mindestens einer dieser Monitore (17) sind.

7. Anlage gemäß Anspruch 6, **dadurch gekennzeichnet, dass** mindestens einer dieser Monitore ein Monitor eines an ein Telefonnetz angeschlossenes Kommunikationsendgeräts (2) ist.

8. Anlage gemäß einem der Ansprüche 5 bis 7, **dadurch gekennzeichnet, dass** mindestens einige dieser Mittel zum Anzeigen Bilddatenprojektoren (18) ist.

9. Anlage gemäß einem der Ansprüche 1 bis 8, **dadurch gekennzeichnet, dass** mindestens einige dieser Mittel zum Verbreiten Mittel für die akustische Verbreitung (20) sind.

10. Anlage gemäß einem der Ansprüche 1 bis 9, **dadurch gekennzeichnet, dass** diese Nachrichtendienstmittel (3, 5) erste mittel für elektronischen Nachrichtendienst (3) und zweite Mittel für telefonischen Nachrichtendienst (5) enthalten.

11. Anlage gemäß Anspruch 10, **dadurch gekennzeichnet, dass** diese ersten Mittel für elektronischen Nachrichtendienst (3) zumindest teilweise in einem Kommunikationsendgerät (2) angesiedelt sind, das via ein erstes Kommunikationsnetz an einen E-Mail-Server angeschlossen werden kann.

12. Anlage gemäß einem der Ansprüche 10 bis 11, **dadurch gekennzeichnet, dass** diese zweiten Mittel für telefonischen Nachrichtendienst (5) zumindest teilweise in einem Telefon (4) angesiedelt sind, das an ein zweites Kommunikationsnetz angeschlossen werden kann.

13. Anlage gemäß einem der Ansprüche 11 und 12, **dadurch gekennzeichnet, dass** dieses erste und dieses zweite Kommunikationetz identisch sind.

14. Anlage gemäß einem der Ansprüche 11 bis 13, **dadurch gekennzeichnet, dass** jedes Kommunikationsnetz ausgewählt wird aus einer Gruppe, welche die öffentlichen Netze vom Typ PSTN, PLMN, i-Mode und Internet (IP) umfasst, und die privaten Netze vom Typ PABX und die privaten Kommunikations-Gateways.

15. Anlage gemäß einem der Ansprüche 1 bis 14, **dadurch gekennzeichnet, dass** sie Mittel zum Übertragen (B) enthält, die mindestens an diese Mittel zum Verwalten (1, 8), an diese Mittel zum Verbreiten (17-20) und an diese Mittel zum Erfassen (9-j) gekoppelt sind.

16. Anlage gemäß Anspruch 15, **dadurch gekennzeichnet, dass** diese Mittel zur Übertragung (B) aus einer Gruppe ausgewählt werden, die die Mittel zur Übertragung per Wellenverbindung und die Mittel zur Übertragung per Drahtverbindung enthält.

17. Anlage gemäß Anspruch 16, **dadurch gekennzeichnet, dass** diese Mittel zur Übertragung per Drahtverbindung zumindest die Busse für Datenaustausch (B) enthalten.

18. Anlage gemäß einem der Ansprüche 16 und 17, **dadurch gekennzeichnet, dass** es sich bei diesen Mitteln zur Übertragung per Wellen ein Infrarot-Sender/-Empfänger handelt.

19. Anlage gemäß einem der Ansprüche 1 bis 18, **dadurch gekennzeichnet, dass** jedes Mittel zur Erfassung (9-j) so aufgebaut ist, dass es zum einem eine Präsenzerfassung an mindestens einem Teil des Bereichs durchführt, in dem es angesiedelt ist, und zum anderen bei Präsenzerfassung Signale an diese Vorrichtung (10) adressien.

20. Anlage gemäß einem der Ansprüche 1 bis 19, **dadurch gekennzeichnet, dass** sie eine eine Vielzahl von Vorrichtungen (10) enthält, die mit verschiedenen primären Kennungen verknüpft sind.

21. Anlage gemäß einem der Ansprüche 1 bis 20, **dadurch gekennzeichnet, dass** jede Vorrichtung (10) vom passiven Typ ist.

22. Anlage gemäß Anspruch 20, **dadurch gekennzeichnet, dass** jede Vorrichtung (10) so aufgebaut ist, dass sie ihre primäre Kennung mittels Wellen überträgt.

23. Anlage gemäß Anspruch 22, **dadurch gekennzeichnet, dass** es sich bei dieser Übertragung um eine Spoontanübertragung handelt.

24. Anlage gemäß Anspruch 22, **dadurch gekennzeichnet, dass** diese Übertragung als Antwort erfolgt auf Signale, welche von diesen Mitteln zur Erfassung (9-j) durch Wellen übertragen werden.

25. Anlage gemäß einem der Ansprüche 1 bis 24, **dadurch gekennzeichnet, dass** jede Vorrichtung (16) ein Organ (14) enthält, das geeignet ist, im Falle einer Betätigung durch einen Nutzer seine Funktion zu aktivieren oder zu deaktivieren.

26. Anlage gemäß einem der Ansprüche 1 bis 25, **dadurch gekennzeichnet, dass** sie erste Mittel zum Umwandeln enthält, die geeignet sind, Textnachrichtten in Tonnachrichten umzuwandeln.

27. Anlage gemäß einem der Ansprüche 1 bis 26, **dadurch gekennzeichnet, dass** sie zweite Mittel zum Umwandeln enthält, die geeignet sind, Tonnachrichten in Textnachrichten umzuwandeln.

28. Anlage gemäß einem der Ansprüche 1 bis 27, **dadurch gekennzeichnet, dass** sie Mittel für den Schalleinfang enthält, die an diese Mittel zum Verwalten (1, 8) gekoppelt sind und so aufgebaut, sind dass Worte die von einem Teilnehmer gesendet werden, empfangen zum Verwalten (1, 8) so aufgebaut sind, dass sie beim Empfangen von digitalen Umwandlungsdaten für diese Nachrichtendienstmittel (3, 5) Befehle erstellen, die typisch für durchzuführende Nachrichtendienstarbeitsvorgänge sind.

29. Anlage gemäß Anspruch 28, **dadurch gekennzeichnet, dass** diese Vorgänge ausgewälht werden aus einer Gruppe, die mindestens die Antwort auf eine gewählte Nachricht die Sicherung oder Löschung einer gewählten Nachricht, die Auswahl einer gewählten Nachricht aus einer Nachrichtenliste, die zuvor in Form von Icons mit Hilfe eines Mittels zum Anzeigen angezeigt wurde oder in Sprachform mit Hilfe von Mitteln zur akustischen Verbreitung verbreitet wurde, im Hinblick auf die Verbreitung der Daten durch dieses Mittel zum Anzeigen oder durch dieses Mittel für die akustische Verbreitung, die Vergrößerung von Text- oder Bilddaten einen gewählten Nachricht, die Wiederholung von Tondaten einer gewählten Nachricht und das Öffnen einer Datei, die an eine gewählte Nachricht angehängt ist, enthält.

30. Anlage gemäß einem der Ansprüche 1 bis 29, **dadurch gekennzeichnet, dass** diese Mittel zum Verwalten (8) konfigurierbar ausgeführt sind.

31. Anlage gemäß Anspruch 30, **dadurch gekennzeichnet, dass** diese Konfiguration sich auf den Abfragemodus dieser Nachrichtendiensmittel (3, 5) bezieht.

32. Anlage gemäß Anspruch 31, **dadurch gekennzeichnet, dass** dieser Abfragemodus periodisch ausgeführt ist.

33. Anlage gemäß einem der Ansprüche 30 bis 32, **dadurch gekennzeichnet, dass** sich diese Konfiguration auf eine erste Art von Nachrichten, die verbreitet werden sollen, bezieht.

34. Anlage gemäß Anspruch 33, **dadurch gekennzeichnet, dass** diese erste Art typisch ist für eine erste Prioritätsstufe, die abhängig ist von der Adresse des Senders der empfangenen Nachrichten.

35. Anlage gemäß einem des Ansprüche 30 bis 34, **dadurch gekennzeichnet, dass** sich diese Konfiguration auf eine zweite Art von Nachrichten, die verbreitet werden sollen, bezieht.

36. Anlage gemäß Anspruch 35, **dadurch gekennzeichnet, dass** diese Art typisch ist für eine zweite Prioritätsstufe, die abhängig ist von der Teilnehmerkennung, die zu einer empfangenen primären Kennung zugehörig ist.

37. Anlage gemäß einem der Ansprüche 30 bis 36, **dadurch gekennzeichnet, dass** diese Mittel zum Verwalten über einer Endgerät-Teilnehmerschnittstelle konfiguriert werden können.
